# EUROPÄISCHE PATENTSCHRIFT

(11) **EP 2 862 405 B1**
(45) Veröffentlichungstag und Bekanntmachung des Hinweises auf die Patenterteilung: **12.09.2018**
(21) Anmeldenummer: 13722445.7
(22) Anmeldetag: 14.05.2013
(51) Int. Cl.: H04W 72/12, G08G 1/16, G08G 1/09, H04W 28/10

(54) **VERFAHREN ZUR VERIFIKATION UND/ODER VORVERARBEITUNG VON DATENPAKETEN UND ZUR DURCHFÜHRUNG DES VERFAHRENS EINGERICHTETES STEUERGERÄT**
METHOD FOR VERIFYING AND/OR PREPROCESSING DATA PACKETS AND CONTROL DEVICE SET UP TO CARRY OUT THE METHOD
PROCÉDÉ DE VÉRIFICATION ET/OU DE PRÉPARATION DE PAQUETS DE DONNÉES ET APPAREIL DE COMMANDE MIS AU POINT POUR LA MISE EN OEUVRE DUDIT PROCÉDÉ

(30) Priorität: 14.06.2012 DE 102012210059
(43) Veröffentlichungstag der Anmeldung: 22.04.2015
(73) Patentinhaber: Continental Automotive GmbH, 30165 Hannover (DE)
(72) Erfinder: GÖTZ, Stefan, 61476 Kronberg / Taunus (DE); STÄHLIN, Ulrich, 65760 Eschborn (DE)
(86) Internationale Anmeldenummer: PCT/EP2013/059928
(87) Internationale Veröffentlichungsnummer: WO 2013/185997

(56) Entgegenhaltungen:
- EP-A1- 2 058 992
- DE-A1- 10 241 134
- DE-A1-102010 002 092
- US-A1- 2007 109 146
- YAN G ET AL: "Providing VANET security through active position detection", COMPUTER COMMUNICATIONS, ELSEVIER SCIENCE PUBLISHERS BV, AMSTERDAM, NL, Bd. 31, Nr. 12, 30. Juli 2008 (2008-07-30) , Seiten 2883-2897, XP022849885, ISSN: 0140-3664, DOI: 10.1016/J.COMCOM.2008.01.009 [gefunden am 2008-01-26]

## Beschreibung

Die Erfindung betrifft ein Verfahren zur Verifikation und/oder Vorverarbeitung von vorzugweise signierten Datenpaketen, die in einer drahtlosen Fahrzeug-zu-Umgebung-Kommunikation durch ein Empfangsgerät eines Fahrzeugs empfangen werden, sowie ein zur Durchführung des Verfahrens eingerichtetes Steuergerät.

Bei dem Verfahren werden in dem Empfangsgerät, d. h. dem Empfänger oder einer nachgeschalteten Recheneinheit, die Relevanz der empfangenen Datenpakete ermittelt und die Datenpakete entsprechend ihrer Relevanz für die Verifikation und/oder die Vorverarbeitung priorisiert, wobei die Ermittlung der Relevanz von dem Abstand des Sendegeräts zu dem Empfangsgerät abhängt, wobei das Empfangsgerät in dem Fahrzeug angeordnet ist und somit erfindungsgemäß der Abstand des Sendegeräts zu dem eigenen Fahrzeug ermittelt wird. Bei dem Verfahren ist vorgesehen, die Überprüfung der Signatur der Sendegeräte bei der Verifikation der Datenpakete und/oder die Vorverarbeitung der Datenpakete in einer durch die Priorisierung vorgegebenen Reihenfolge durchzuführen.

Die Fahrzeug-zu-Umgebung-Kommunikation befindet sich derzeit in der Entwicklung, wobei verschiedene Standards (beispielsweise ETSI oder CEN für Europa oder IEEE bzw. SAE für USA) entwickelt werden. Die Fahrzeug-zu-Umgebung-Kommunikation, kurz auch V2X-Kommunikation genannt, basiert meist auf einer WLAN-Übertragungstechnik nach dem Standard IEEE 802.11p, wobei grundsätzlich auch eine GSM/UMTS/LTE oder andere Mobilfunkverbindung für die Kommunikation in Frage kommt. Auf dieser Basis werden derzeit mit Übertragungsgeräten für die Fahrzeug-zu-Umgebung-Kommunikation ausgestattete Fahrzeuge und Infrastruktureinheiten (Road-Side-Units (RSU)) getestet.

Ein zentrales Problem der Fahrzeug-zu-Umgebung-Kommunikation stellt die Authentizität der im Rahmen der Fahrzeug-zu-Umgebung -Kommunikation übertragenen Datenpakete dar, da diese teilweise sicherheitsrelevante oder persönliche Informationen enthalten und somit ein gewisser Schutz dieser Daten sowohl im Hinblick auf die Bestimmtheit des Senders als auch auf die Verarbeitung durch den Empfänger gewährleistet werden muss. Um diese Sicherheitsanforderung zu erreichen ist geplant, jedes Datenpaket mittels kryptografischer Verfahren zu signieren und evtl. auch zu verschlüsseln. Hierzu kann ein Public-Key-Infrastructure(PKI)-basiertes System mit sogenannten Elliptic Curves Algorithmen (ECC) dienen. Derartige Verfahren sind allgemein bekannt und nicht Gegenstand der vorliegenden Erfindung, so dass diese Verfahren im Rahmen dieser Anmeldung nicht näher beschrieben werden müssen.

Von dem empfangenden Fahrzeug können die empfangenen Datenpakete respektive Botschaften dann verifiziert werden, bevor eine Verarbeitung und Auswertung in den einzelnen Steuergeräten des Fahrzeugs stattfindet. Die Verifikation beinhaltet dabei insbesondere die Überprüfung der Signatur des Sendegeräts in dem Empfangsgerät.

Diese Verifikation ist sehr rechenzeitintensiv und kann nach heutigem Stand der Technik in üblichen Steuergeräten nur mittels Hardwarebeschleunigerchips durchgeführt werden, um eine zu große Anzahl von Nachrichten verifizieren zu können und die hohe Anzahl an potentiell in der Fahrzeug-zu-Umgebung-Kommunikation ausgetauschten Datenpaketen zu bewältigen.

Im Rahmen der derzeit ins Auge gefassten Standards ist vorgesehen, dass zwingend alle ausgesendeten Datenpakete signiert werden müssen. Es bleibt dem Empfänger jedoch überlassen, wie er mit den empfangenen Datenpaketen umgeht und ob bzw. in welcher Reihenfolge die Signatur der Datenpakete geprüft wird. Es sind Situationen vorstellbar, in denen die in dem Empfangsgerät implementierte Rechenkapazität der Recheneinheit nicht ausreichend ist, um alle empfangenen Datenpakete zu verifizieren und es daher einer gezielten Auswahl von Nachrichten bzw. Datenpaketen bedarf, die aller Vorrausicht nach die größte Relevanz für das eigene Fahrzeug haben.

In diesem Umfeld ist bereits beschrieben worden, die empfangenen Daten in zumindest zwei Relevanzklassen einzusortieren und abhängig von der Relevanzklasse in dem Kommunikationsstapel weiter zu verarbeiten und einer Authentifizierung zuzuführen oder Datenpakte beispielsweise zu verwerfen oder nur für nicht sicherheitsrelevante Zwecke einzusetzen. Als Kriterium für die Einteilung in die Relevanzklassen kann dabei der Abstand bzw. die Entfernung zwischen dem Objekt und dem Fahrzeug gewählt werden. Zusätzlich oder alternativ ist auch beschrieben worden, anstelle des Abstands eine mögliche Kollisionszeit bezogen auf den Abstand und die Relativgeschwindigkeit zwischen dem das Datenpaket aussendenden Objekt und dem eigenen Fahrzeug zu verwenden.

In einem ähnlichen Zusammenhang ist aus der US 2007/0109146 A1 bekannt, bei einer bidirektionalen drahtlosen Kommunikationsverbindung zwischen Fahrzeugen ein anpassbares Relevanzgebiet vorzusehen, das periodisch regelmäßig oder kontinuierlich in Übereinstimmung mit dem kontinuierlich überwachten Straßenzustand, Sichtbarkeitsbedingungen und/oder Fahrzeugbetriebsbedingungen angepasst wird. Eine ähnliche Offenbarung findet sich auch in der WO 03/077223 A1.

Es hat sich jedoch gezeigt, dass diese Maßnahmen alleine nicht geeignet sind, die Relevanz empfangener Datenpakete zuverlässig soweit zu reduzieren, dass eine Vorauswahl bzw. Priorisierung relevanter Datenpakte im Hinblick auf die zur Verfügung stehende Rechenkapazität in dem Empfangsgerät (Steuergerät) zuverlässig ausgeführt werden kann.

Weiterhin ist aus der EP 2 058 992 A1 ein Verfahren zum Bearbeiten von Nachrichten sowie eine Nachrichtenbearbeitungsvorrichtung bekannt.

Aufgabe der vorliegenden Erfindung ist es daher, die rechenintensive Verifikation und/oder Vorverarbeitung von Datenpaketen im Ergebnis zu beschleunigen und die Kosten für die dafür benötigte Rechenkapazität möglichst gering zu halten.

Diese Aufgabe wird erfindungsgemäß durch ein Verfahren mit den Merkmalen des Anspruchs 1 gelöst. Dabei ist vorgesehen, dass die Ermittlung der Relevanz zur Priorisierung der Datenpakete auch, ggf. auch zusätzlich, von der Art des Datenpakets und/oder von der Art oder Lage des Sendegeräts abhängt. Hierdurch werden für die Relevanzeinstufung weitere und/oder präzisere Kriterien verwendet, so dass die Priorisierung der Datenpakete effektiver und zuverlässiger ist. Da die Verifikation und/oder Vorverarbeitung der Datenpakete in der Reihenfolge ihrer Priorisierung erfolgt, können die Empfangsgeräte auch mit geringerer Rechenleistung die wichtigsten Datenpakete zeitnah abarbeiten, so dass eine erhöhte Rechenkapazität für die Ausarbeitung einer Vielzahl von Datenpaketen nicht notwendig ist, da die Datenpakete nacheinander entsprechend ihrer Priorisierung abgearbeitet werden, wobei erfindungsgemäß Datenpakete nach einer bestimmten Zeit in ihrer Priorisierung entweder herabgesetzt und/oder aus der Verarbeitungsliste gelöscht werden können, weil anzunehmen ist, dass diese Pakete dann keine Bedeutung mehr haben.

Es ist besonders sinnvoll, die Art des Datenpakets vor einer Verifikation und/oder Vorverarbeitung zu überprüfen. Entsprechend den diskutierten Standards ist vorgesehen, verschiedene Typen von Datenpaketen auszusenden, die in ihrer Relevanz unterschiedlich sind. So sind beispielsweise Decentralized Environmental Notification Messages (DENM) vorgesehen, die in der Regel akute Warnhinweise beinhalten und daher im Hinblick auf die Sicherheit besonders relevant sind. Diese Nachrichten werden erfindungsgemäß eine besonders hohe Priorisierung erhalten. Ferner sind Cooperative Awareness Messages (CAM) vorgesehen, in denen üblicher Weise der Status verschiedener Teilnehmer an der Fahrzeug-zu-Umgebung-Kommunikation, beispielsweise Fahrzeugtyp und gerichtete Geschwindigkeit eines anderen Fahrzeugs, Art und Zustand einer Road-Side-Unit (wie einer Ampel), oder dergleichen enthalten sein kann. Diese Nachrichten sowie andere, nicht näher spezifizierte Nachrichten haben in der Regel eine geringere Sicherheitsrelevanz und werden daher nachrangig beurteilt, wobei vorzugsweise die CAM-Nachrichten (Datenpakete) noch vor den allgemeinen, nicht näher in ihrer Art spezifizierten Datenpaketen behandelt werden.

Entsprechendes gilt für die Art des Sendegeräts, die ein anderes Fahrzeug, eine Warn-Road-Side-Unit oder eine einfache Informations-Road-Side-Unit sein kann, so dass diesen Sendegeräten per se unterschiedliche Relevanz zugeordnet wird, wobei Fahrzeugen und Warn-Road-Side-Units höhere Relevanz haben als andere Sendegeräte.

Besonders vorteilhaft ist es auch, die Lage des Sendegeräts bei der Ermittlung der Relevanz zu berücksichtigen, wobei die Lage des Sendegeräts bezogen auf ein statisches und/oder sich dynamisch änderndes, anderes sicherheitsrelevantes Objekt berücksichtigt wird, d. h. ein von dem das Datenpaket empfangenden Fahrzeug verschiedenes Objekt. Es hat sich nämlich gezeigt, dass alleine der Abstand oder der Bezug zum eigenen Fahrzeug in der Regel kein taugliches Kriterium ist, eine zuverlässige Priorisierung festzulegen. Insbesondere ist es sinnvoll, als weiteres Kriterium ein anderes, drittes sicherheitsrelevantes Objekt auszuwählen, wobei als besonders sicherheitsrelevante Objekte solche Objekte ausgewählt werden können, die sich aus der Fahrzeug-zu-Umgebung-Kommunikation ableiten oder erkennen lassen. Derartige weitere sicherheitsrelevante Objekte können die Art eines Sendegeräts, z.B. eine Infrastruktureinheit, oder die Lage des Sendegeräts bezogen auf ein anderes statisches Objekt sein. Dieses andere Objekt kann einfacher Weise ein ortsfestes Objekt sein, d. h. ein fester Raum, der bezüglich der Verkehrssicherheit und/oder Datensicherheit als sicherheitskritisch bekannt ist. Derartige Orte können Unfallschwerpunkte sein, aber auch Orte, in denen häufig fehlerhafte oder gefälschte Datenpakete ausgesendet werden.

Gemäß einer besonders bevorzugten Weiterentwicklung des vorgeschlagenen Verfahrens ist auch vorgesehen, dass bei der Ermittlung der Relevanz die Lage des Sendegeräts bezogen auf ein dynamisches Objekt berücksichtigt wird. Ein dynamisches Objekt ist erfindungsgemäß eine in dem Empfangsgerät identifizierte und einem Ort zugewiesene sicherheitsrelevante Situation, die temporär auftritt. Hierdurch wird die Berücksichtigung besonders aktueller Situationen ermöglicht. Ein solches dynamisches Objekt kann beispielsweise eine DENM-Mitteilung oder eine wichtige oder gefährliche Verkehrssituation, beispielsweise ein erkanntes Stauende, sein, und damit typischer Weise ein Objekt, das aus der Fahrzeug-zu-Umgebung-Kommunikation erkannt oder abgeleitet werden kann. Dies hat den Vorteil, dass den Warnmeldungen sowohl eine Zeit als auch ein Ort zugewiesen ist, so dass das dynamische Objekt im Rahmen der Fahrzeug-zu-Umgebung-Kommunikation klar vorgegeben ist.

Erfindungsgemäß kann ein dynamisches Objekt auch eine wichtige oder gefährliche Verkehrssituation sein, die durch Umgebungssensoren eines Fahrzeugs, wie Radar, Lidar, Kameras oder dergleichen, erkannt und lokalisiert worden ist.

Indem die Lage des Senders relativ zu einem solchen dynamischen Objekt für die Relevanzbeurteilung mit herangezogen wird, ist es möglich, Nachrichten von Orten, die eine besonders hohe Relevanz für die Sicherheit des Fahrzeugs haben, derart zu priorisieren, dass sie bei der Verifikation und/oder Vorverarbeitung zuerst abgearbeitet werden, so dass die Informationen aus dem Umfeld einer besonders kritischen Situation (im Sinne eines dynamischen Objekts) schnell ausgewertet werden und in dem Fahrzeug zur Warnung des Fahrers und/oder für Fahrerassistenzsysteme zur Verfügung stehen.

Gemäß einer bevorzugten Variante des vorgeschlagenen Verfahrens ist vorgesehen, dass bei der Berücksichtigung der Lage des Sendegeräts zunächst sicherheitskritische Objekte in der Umgebung des Fahrzeugs ermittelt werden und ein Abstandsbereich zu jedem sicherheitskritischen Objekt ermittelt wird. Dann werden die sicherheitskritischen Objekte in eine Relevanzreihenfolge gebracht, insbesondere entsprechend ihres Abstands zu dem Empfangsgerät respektive dem eigenen Fahrzeug und/oder entsprechend anderer Kriterien. Erfindungsgemäß werden anschließend Datenpakete aus dem Abstandsbereich der sicherheitskritischen Objekte in der durch die Relevanzreihenfolge der sicherheitskritischen Objekte vorgegebenen Reihenfolge verarbeitet und/oder verifiziert. Auch in diesem Fall hängt die Ermittlung der Relevanz zumindest indirekt von dem Abstand des Sendegeräts zum Empfangsgerät ab, da die sicherheitskritischen Objekte in der Umgebung des Fahrzeugs ermittelt werden, die insbesondere abhängig von dem Abstand des Fahrzeugs definiert ist, beispielsweise durch Überprüfung, ob die Sender in einem bestimmten geografischen Gebiet um das Fahrzeug liegen, und ferner die Sender in einem bestimmten Abstandsbereich um das sicherheitskritische Objekt liegen. Zusätzlich kann bei der Ermittlung der Relevanz natürlich auch der direkte Abstand eingehen, beispielsweise durch Überprüfung, ob das Sendegerät in einem bestimmten geografischen Gebiet um das Fahrzeug liegt. Sendegeräten in diesem Gebiet um das Fahrzeug kann dann eine größere Relevanz zugewiesen werden als außerhalb dieses Gebiets liegenden Sendegeräten.

Entsprechend ist es erfindungsgemäß vorgesehen, für die Abhängigkeit der Relevanz von dem Abstand des Sendegeräts zu dem Empfangsgerät und/oder für die Ermittlung der sicherheitskritischen Objekte in der Umgebung des (eigenen) Fahrzeugs eine vorgegebene Geometrie um das (eigene) Fahrzeug zu erzeugen. Hierdurch wird bei der Relevanzprüfung auch der Abstand zu dem eigenen Fahrzeug mit berücksichtigt, wobei nicht nur der Abstandsbetrag, sondern ein je nach Richtung gewichteter Abstandsbetrag auf diese Weise am einfachsten berücksichtigt werden kann, beispielsweise um verschiedene Fahrsituationen des Fahrzeugs zu berücksichtigen.

Gemäß eines veranschaulichenden Beispiels kann die vorgegebene Geometrie eine runde, elliptische, rechteckige oder trapezförmige Grundform aufweisen, die das eigene Fahrzeug vorzugsweise umschließt und parametrierbar mit der Fahrtrichtung des Fahrzeugs vorzugsweise zu dem Fahrzeug fest ausgerichtet ist. Vorzugsweise ist es auch möglich, die Länge und Breite der Grundform durch Vorgabe von Parametern anzupassen und/oder vorzugsweise die Form einzelner Seiten der Grundform beispielsweise durch Vorgaben von Parametern anzupassen, beispielsweise indem einzelne Seiten abgerundet werden, wodurch sich die insgesamt berücksichtigte Geometrie um das (eigene) Fahrzeug ändert. Hierdurch ist es möglich, verschiedene Fahrsituationen durch Auswahl geeigneter Geometrieen und/oder Parameter zur Ermittlung der Geometrieen zu berücksichtigen. Erfindungsgemäß ist vorgesehen, dass die vorgegebene Geometrie auch analog zu der Form der Lichtverteilung eines Scheinwerfers in Abhängigkeit von der Fahrsituation und/oder Fahrereingaben in ihrer Ausdehnung, Ausrichtung und Form angepasst wird, beispielsweise analog einer Leuchtweitenregelung, eines Kurvenlichts oder dergleichen. Diese Option ist insbesondere dann sinnvoll, wenn eine vor dem Fahrzeug in Fahrtrichtung liegende Situation zu erfassen ist, beispielsweise bei schneller Fahrt.

Weiterhin kann erfindungsgemäß vorgesehen sein, dass für die Abhängigkeit der Relevanz von dem Abstand des Sendegeräts zu dem Empfangsgerät und/oder für die Ermittlung der sicherheitskritischen Objekte in der Umgebung des Fahrzeugs die Fahrsituation des Fahrzeugs mit berücksichtigt wird, insbesondere definiert durch die Geschwindigkeit des Fahrzeugs. Als weitere und/oder alternative Kriterien können auch die Anzahl und/oder der Ausschlag von Lenkbewegungen des eigenen Fahrzeugs herangezogen werden. Weiterhin kommen als Kriterien ggf. eine Umfelderkennung aus einem Ortungssystem in Zusammenhang mit Karteninformationen und/oder Umgebungssensoren, insbesondere Kameras, in Frage. Hierdurch ist es beispielsweise möglich zu ermitteln, ob sich der Benutzer auf Autobahnen, Landstraßen oder städtischen Straßen findet. Diese Abhängigkeit kann insbesondere auch darin bestehen, dass die zuvor erwähnte ausgewählte bzw. vorgegebene Geometrie von der Fahrsituation des Fahrzeugs abhängt. Auch hierdurch lässt sich die Priorisierung der Datenpakete bezogen auf die jeweilige Situation, in der sich das Fahrzeug befindet, zielgerichtet durchführen.

Ferner kann erfindungsgemäß für die Abhängigkeit der Relevanz von dem Abstand des Sendegeräts zu dem Empfangsgerät und/oder für die Ermittlung der sicherheitskritischen Objekte in der Umgebung des Fahrzeugs eine Geschwindigkeit des Sendegeräts berücksichtigt werden, die sich insbesondere als gerichtete Geschwindigkeit aus Informationen der Fahrzeug-zu-Umgebung-Kommunikation ableiten lässt.

In einer Weiterentwicklung des Verfahrens kann zudem vorgesehen sein, dass für die Ermittlung der sicherheitskritischen Objekte in der Umgebung des Fahrzeugs die Art des sicherheitsrelevanten Objekts, die Anzahl der sicherheitsrelevanten Objekte in der Empfangsumgebung, die Anzahl der aktuell durch das Empfangsgerät pro Zeiteinheit empfangenen Datenpakete und/oder die Rechenleistung des Empfangsgeräts, insbesondere die Rechenleistung zur Verifikation und/oder Vorverarbeitung von Datenpaketen, berücksichtigt werden. Diese Faktoren helfen, die Relevanzauswahl im Hinblick auf das jeweilige Empfangsgerät abzustimmen.

Zu der zuvor mehrfach erwähnten Ermittlung der sicherheitskritischen Objekte in der Umgebungsfahrzeugs zählt erfindungsgemäß auch die Definition des Abstandsbereichs zu einem sicherheitsrelevanten Objekt.

Die Erfindung betrifft ferner ein Steuergerät eines Kraftfahrzeugs zur Verifikation und/oder Vorverarbeitung von vorzugsweise signierten Datenpaketen mit einem Empfangsgerät für die drahtlose Fahrzeug-zu-Umgebung-Kommunikation und mit einer Recheneinheit, wobei die Recheneinheit zur Durchführung des vorbeschriebenen Verfahrens oder Teilen hiervon eingerichtet ist.

Weitere Vorteile, Merkmale und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen. Es zeigen:
- Fig. 1: in einem Ablaufdiagramm schematisch den Ablauf einer Ausführungsform des erfindungsgemäßen Verfahrens zur Verifikation und/oder Vorverarbeitung von Datenpaketen und
- Fig. 2: schematisch einen Überblick über erfindungsgemäß bevorzugt vorgeschlagenen Varianten und/oder Möglichkeiten zur Ermittlung der Relevanz eines Datenpakets.

In der drahtlosen Fahrzeug-zu-Umgebung-Kommunikation werden Datenpakete durch ein hier nicht dargestelltes Empfangsgerät eines Fahrzeugs empfangen, wobei das Datengerät üblicherweise auch eine Recheneinheit zur Verifikation und/oder Vorverarbeitung der empfangenen Datenpakete enthält und in ein Kraftfahrzeug-Steuergerät integriert ist.

Die Verifikation und/oder Vorverarbeitung von Datenpaketen stellt eine rechenintensive Operation in dem Empfangsgerät dar, die in herkömmlichen Empfangsgeräten ohne entsprechenden hardware- und kostenmäßigen Aufwand nicht ohne Weiteres betrieben werden kann.

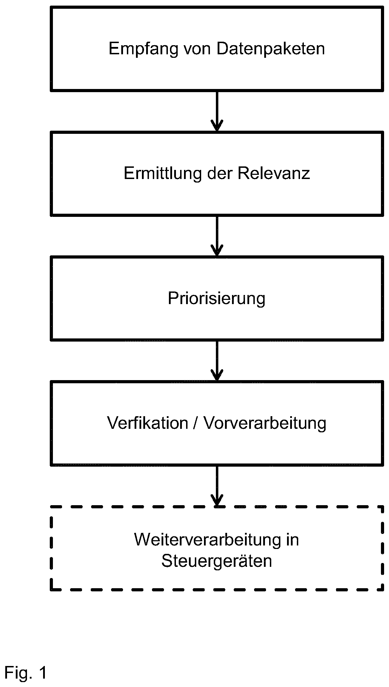

Wie in Fig. 1 schematisch dargestellt, schlägt die Erfindung daher vor, nach dem Empfangen des Datenpakets zunächst die Relevanz der empfangenen Datenpakete zu ermitteln und die Datenpakete anschließend entsprechend ihrer erkannten Relevanz für die Verifikation und/oder Vorverarbeitung zu priorisieren. Dies bedeutet, dass in der Recheneinheit des Empfangsgeräts, die eine Steuereinheit mit dem eigentlichen Empfänger oder eine Recheneinheit in einem zu dem Empfänger separaten Steuergerät sein kann, aufgrund vorgegebener Kriterien die Relevanz des Datenpaketes automatisch abgeschätzt wird. Dies erfolgt für alle eingehenden Datenpakete.

Damit lässt sich aus der ermittelten bzw. abgeschätzten Relevanz der Datenpakete eine Rangfolge der Wichtigkeit der Datenpakete ermitteln, die auch als Priorisierung bezeichnet wird. Die Datenpakete werden durch die Priorisierung also in eine Reihenfolge sortiert, in der dann die Weiterverarbeitung in Steuergeräten des Kraftfahrzeugs erfolgt. Letztere ist nicht mehr Gegenstand des vorliegenden Verfahrens.

Daher ist der die Weiterverarbeitung repräsentierende Kasten in Fig. 1 gestrichelt dargestellt.

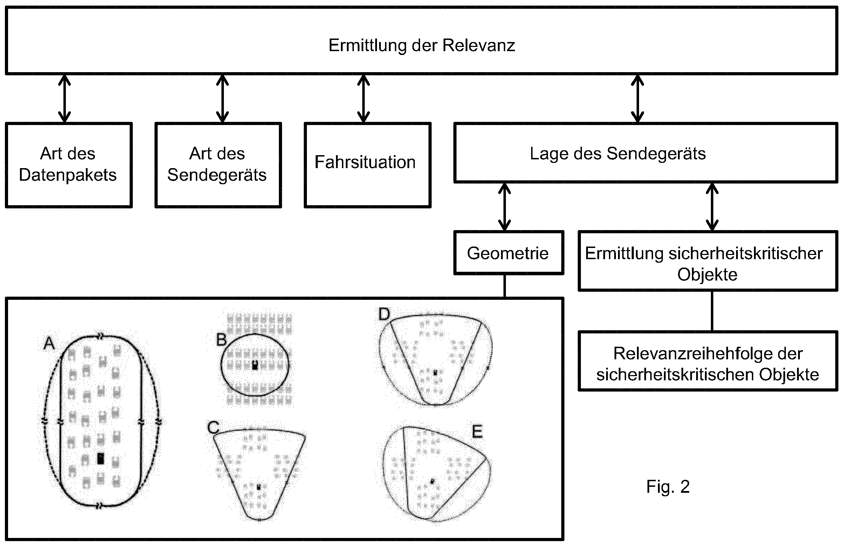

Die dem Empfang von Datenpaketen folgende Ermittlung der Relevanz wird nachfolgend mit Bezug auf Fig. 2 in verschiedenen Varianten und Möglichkeiten noch einmal näher beleuchtet.

Die hier dargestellten Möglichkeiten zur Ermittlung der Relevanz stellen jeweils besonders bevorzugte Anwendungen dar, die der Ermittlung der Relevanz eines Datenpaketes dienen können und ggf . auch miteinander kombiniert werden können, um die Relevanz von Datenpaketen mit besonders großer Zuverlässigkeit zu erkennen.

In der Fahrzeug-zu-Fahrzeug-Kommunikation ist gemäß den vorgeschlagenen Standards vorgesehen, dass die Art der Datenpakete bei der Übertragung in dem Datenpaket mit angegeben ist und losgelöst von einer vollständigen inhaltlichen Auswertung des Datenpakets einfach erkannt werden kann. So ist beispielsweise vorgesehen, Gefährdungssituationen auf der Straße in sogenannten Decentralized Environmental Notification Messages (DENM) zu übertragen. Allgemeine Mitteilungen über den Zustand anderer Kommunikationspartner der Fahrzeug-zu-Umgebung-Kommunikation werden in sogenannten Cooperative Awareness Messages (CAM) besendet. Diese enthalten jedoch in der Regel keine direkt sicherheitsrelevanten Informationen. Mittels CAMs kann jedoch eine gefährliche Situation erkannt werden, wie z.B. ein Fahrzeug auf Kollisionskurs.

Daher ist eine Möglichkeit zur Ermittlung der Relevanz und zur Priorisierung eines Datenpaketes, die Art eines empfangenen Datenpakets auszuwerten und die sogenannten DENM-Mitteilungen mit einer hohen Priorität zu behandeln, da die Art der DENM-Mitteilungen in aller Regel akute Warnhinweise beinhalten. Somit ist es sinnvoll, die DENM-Mitteilungen vor den CAM-Mitteilungen und allen anderen möglichen Datenpaketen, die im Rahmen der Fahrzeug-zu-Umgebung-Kommunikation ausgetauscht werden, zu priorisieren.

Eine weitere Möglichkeit zur Ermittlung der Relevanz eines Datenpakets kann auch darin liegen, die Art des Sendegerätes zu berücksichtigen. So gibt es beispielsweise Sendegeräte, die als sogenannte Road-Side-Units davor warnen, dass sich das empfangene Fahrzeug nun einem besonders gefährdeten Straßenbereich nähert. Road-Side-Units sind also nicht in anderen Fahrzeugen, sondern in separaten Sendegeräten am Straßenrand angeordnete Kommunikationsteilnehmer, beispielsweise in Ampeln, Warnschildern oder dergleichen, die ggf. an Unfallschwerpunkten oder anderen gefährlichen Stellen durch Aussenden von Datenpaketen auf diese Gefährdungsstelle aufmerksam machen. So können Sendegeräte, die in Hinweis- oder Warnschildern angeordnet sind, auch priorisiert behandelt werden.

Hierbei, aber auch in Kombination mit anderen Möglichkeiten zur Ermittlung der Relevanz eines Datenpaketes, kann insbesondere auch die Fahrsituation des eigenen Fahrzeugs berücksichtigt werden. So können abhängig von der Fahrsituation solche Datenpakete ausgewählt werden, die wahrscheinlich eine höhere Relevanz für das empfangende (eigene) Fahrzeug haben als andere. Die Ermittlung der Relevanz kann dabei beispielsweise anhand von grundsätzlichen Bedingungen erfolgen, wie beispielsweise:
a. Fahren auf Strecken mit großen Geschwindigkeiten und geringen Lenkbewegungen (Bundes-, Landstraßen und Autobahnen);
b. Fahren auf Strecken mit mittleren Geschwindigkeiten und großen Lenkbewegungen (Staats-, Bundes- und Landstraßen sowie Autobahnen mit Abbiegevorgängen bzw. Abfahrten);
c. Fahren auf Strecken mit geringen Geschwindigkeiten und großen Lenkbewegungen (Staatsstraßen und Parkplätzen).

Unter Berücksichtigung dieser verschiedenen Fahrsituationsklassen kann die Relevanz einzelner Datenpakete dann entsprechend der Position des aussendenden Fahrzeugs bzw. allgemeiner des aussendenden Sendegeräts vorzugsweise relativ zum eigenen Fahrzeug erfolgen, d. h. abhängig vom Abstand des eigenen Fahrzeugs zu dem Sendegerät.

Gemäß einem wichtigen weiteren Merkmal zur Ermittlung der Relevanz wird also auch die Lage des Sendegeräts absolut und/oder relativ zu dem eigenen Fahrzeug berücksichtigt. So ist es möglich, für die Auswahl der Datenpakete mit höherer Relevanz die sendenden Stationen nach geometrischen Gesichtspunkten auszuwählen, wobei im Folgenden verschiedene Möglichkeiten für Geometrieen beschrieben werden, die jeweils die Sichtbarkeit von Fahrzeugen darstellen sollen.

Das in den verschiedenen Geometrieen A, B, C, D und E jeweils dunkel dargestellte Fahrzeug stellt das eigene Fahrzeug bzw. das Bezugsfahrzeug dar (empfangendes Fahrzeug), das beispielsweise abhängig von der eben beschriebenen Fahrsituation eine der Geometrieen A bis E auswählt, nach denen die empfangenen Datenpakete in der Relevanz eingeordnet und anschließend priorisiert werden. Entsprechend dieser Reihenfolge erfolgt dann die Verifikation und/oder Vorverarbeitung der Datenpakete. Die dargestellten Geometrieen A bis E sind jedoch nicht als exklusive bzw. einschränkende Liste zu verstehen, da auch weitere Geometrieen je nach Fahrsituation denkbar und sinnvoll sein können.

Die Geometrie A ist dadurch charakterisiert, dass diese eine Breite von mehreren Fahrstreifen hat und eine Ausdehnung über viele Fahrzeuglängen nach vorne und einige Fahrzeuglängen nach hinten aufweist. Die heller dargestellten Punkte um das dunkle Eigenfahrzeug sollen dabei andere Fahrzeuge auf einer Fahrbahn charakterisieren, beispielsweise einer zweispurigen Autobahn mit Gegenfahrbahn, auf der sich das eigene Fahrzeug mit hoher Geschwindigkeit bewegt. Je nach Geschwindigkeit des Fahrzeugs kann die Geometrie vorzugsweise weiter oder weniger weit nach vorne reichen. Die Breite der Geometrie A kann so angepasst werden, dass zumindest alle Fahrstreifen der Fahrbahn sowie ggf. Standstreifen mit abgedeckt werden.

Die Geometrie B zeigt ein im Wesentlichen kreis- bzw. ellipsenförmiges Relevanzgebiet, bei dem sich das eigene Fahrzeug beispielsweise in einer Parklücke auf einem Parkplatz befindet. Die Ausdehnung dieses Relevanzgebiets ist vergleichsweise klein, da sich das eigene Fahrzeug mit nur geringer Geschwindigkeit bewegt. Da in diesem Fall auch häufig die Fahrtrichtung zwischen einem Vorwärtsfahren und einem Rückwärtsfahren gewechselt wird, ist das eigene Fahrzeug mit dem Empfangsgerät etwa im Mittelpunkt der Geometrie angeordnet und deckt nach vorne und hinten sowie zu den beiden Seiten einen in etwa gleich großen Bereich ab.

Die Geometrie C ist dadurch charakterisiert, dass diese eine Trapezform mit gerundeten Vor- und Rückseiten hat, vergleichbar etwa einem Lichtkegel, der auf eine Fahrbahn trifft. Die hintere Breite der Trapezform umfasst die Breite von mehreren Fahrstreifen, um ggf. Warnmitteilungen von Fahrzeugen im Rückfeld des Fahrzeugs auf der Straße zu erfassen. Die vordere Breite der Trapezform ist größer als die hintere Breite der Trapezform, um beispielsweise an Kreuzungen auch den kreuzenden Verkehr mit zu erfassen.

Die Geometrie D basiert auf der Geometrie C und hat zusätzlich zu den gerundeten Vor- und Rückseiten auch gerundete Seiten. Auch hier erfasst die hintere Breite der Trapezform die Breite von mehreren Fahrstreifen. Die vordere Breite der Trapezform ist größer als die hintere Breite der Trapezform, um nach vorne einen insgesamt geweiteten Gesichtsbereich aufzuweisen. Sie kann bspw. auf Landstraßen angewendet werden. Aufgrund der gerundeten Seiten umfasst die Geometrie jedoch eine größere seitliche Sichtbarkeit für Querverkehr, so dass sich diese Geometrie besonders für einen Stadtverkehr eignet.

Die Geometrie E berücksichtigt ergänzend zu der Geometrie C oder auch noch den Lenkwinkel des eigenen Fahrzeuges, das in dem dargestellten Beispiel nach rechts abbiegen will. Damit erhalten die Fahrzeuge in der rechten Querstraße eine höhere Relevanz. Dem wird Rechnung getragen, indem die Trapezform mit dem Lenkwinkel nach rechts abknickt, so dass in diesem Bereich mehr Fahrzeuge erfasst werden.

Abhängig von den jeweiligen Fahrsituationen a, b oder c wird eine der vorgenannten Geometrieen zur Auswahl der Datenpakete mit der größten Relevanz verwendet.

Sind beispielsweise alle empfangenen Nachrichten gemäß der Ortsposition des Sendegeräts nach der ausgewählten Geometrie verifiziert worden, kann die Geometrie auf eine weitere Geometrie ausgeweitet werden. Damit kann in einer zweiten bzw. dritten Priorisierung auch der jeweils eingrenzende Bereich erweitert werden. Diese Abarbeitung unterschiedlicher Geometrieen erfolgt, bis die maximale Anzahl an Botschaften verifiziert wurde, die die Hardware ermöglicht. Hierzu ein beispielhaftes Vorgehen:
In der Fahrsituation a, d. h. dem Fahren mit großen Geschwindigkeiten und geringen Lenkbewegungen, wird zunächst die Geometrie A, dann die Geometrie B oder C und dann eine Verlängerung der Geometrie A in Fahrtrichtung nach vorne und/oder hinten ausgewählt, um die Relevanz unterschiedlicher Datenpakete zu erfassen. Die Geometrie A erfasst viele Datenpakete, die in der typischen Sichtweise des Eigenfahrzeugs liegen. Die Geometrie B erfasst dann diejenigen Datenpakete, die besonders nahe zu dem Eigenfahrzeug vorhanden sind und daher die größte Relevanz aufweist. Sofern dann immer noch nicht abgearbeitete Datenpakete zur Verfügung stehen, wird der Relevanzbereich der Geometrie A insbesondere nach vorne und/oder hinten erweitert, um auch diese Datenpakte noch abarbeiten zu können.

In der vorbeschriebenen Fahrsituation c mit geringen Geschwindigkeiten und großen Lenkbewegungen wird zunächst die Geometrie B ausgewählt, die den unmittelbaren Umkreis des Fahrzeugs im Stand bzw. bei ganz geringen Geschwindigkeiten abdeckt. Sobald sich das Fahrzeug ein wenig bewegt, wird die Geometrie B dann in die Geometrie D oder E geändert, wobei die Geometrie D oder E je nach Fahr- bzw. Lenkrichtung nach vorne und hinten vergrößert werden kann, um ggf. bis dahin noch nicht als relevant eingestufte Datenpakete zu erfassen und mit abzuarbeiten.

Ein weiterer, ggf. auch mit den vorbeschriebenen Geometrieen kombinierbarer Aspekt bei der Ermittlung der Relevanz liegt darin, die Lage des Sendegeräts nicht relativ zu dem eigenen Fahrzeug zu bestimmen, sondern sicherheitskritische Objekte zu ermitteln, die beispielsweise in einer der Geometrieen A bis E um das eigene Fahrzeug liegen und anschließend die Lage des Sendegeräts zu diesem sicherheitskritischen Objekt auszuwerten. Dabei kann grundsätzlich so vorgegangen werden, dass zunächst die sicherheitskritischen Objekte in der Umgebung des Fahrzeugs ermittelt werden und anschließend die Relevanzreihenfolge der sicherheitskritischen Objekte um das Fahrzeug festgelegt wird, um ausgehend davon die Relevanz der empfangenen Mitteilungen festzustellen. Wichtige, sicherheitsrelevante Objekte können eine wichtige Situation, wie beispielsweise ein Stauende, eine DENM-Mitteilung, eine Infrastruktureinheit oder ein als sicherheitskritisch bekannter Ort sein, der beispielsweise in festen Koordinaten bekannt ist sein.

Sobald ein solcher Ort in der Umgebung des Fahrzeugs, beispielsweise innerhalb einer der Geometrieen A bis E auftaucht, wird das sicherheitskritische Objekt als solches ermittelt. Anschließend wird bei den eingehenden Datenpaketen geprüft, wie nahe das Sendegerät zu dem Ort eines sicherheitskritischen Objektes liegt, beispielsweise durch Vorgabe eines Abstands. Auch dieser Abstand kann von der Geschwindigkeit des eigenen Fahrzeugs, der Geschwindigkeit des Sendegeräts, der Art des sicherheitskritischen Objektes, der Anzahl der sicherheitskritischen Objekte in der Empfangsumgebung des Fahrzeugs, der Anzahl der Botschaften, die aktuell pro Zeiteinheit empfangen werden, und/oder der Verifizierungsleistung des Empfangsgerätes bzw. der dafür verwendeten Recheneinheit abhängen.

Dazu können konkret zuerst die sicherheitskritischen Objekte in der Umgebung des Fahrzeugs ermittelt werden. Anschließend wird, beispielsweise durch Vorgabe eines Umkreises um jedes sicherheitskritische Objekt, festgelegt, welche Sendegeräte diesem sicherheitskritischen Objekt noch zugeordnet werden. Dann werden die sicherheitskritischen Objekte priorisiert und die Botschaften aus dem definierten Umkreis werden in der Relevanzreihenfolge des ersten sicherheitskritischen Objektes verifiziert bzw. vorverarbeitet. Anschließend folgen die Botschaften respektive Datenpakete aus dem definierten Umkreis um die in der Relevanzreihenfolge nachfolgenden sicherheitskritischen Objekte. Sofern bei diesem Verfahren nicht alle Datenpakete erfasst werden, können anschließend andere der vorgenannten Verfahren angewendet werden, um auch deren Relevanzreihenfolge festzulegen.

Durch das vorbeschriebene Vorgehen kann somit eine effiziente Vorselektion relevanter Datenpakete im Sinne einer Vorverarbeitung und/oder Verifikation durchgeführt werden, wobei es das Ziel ist, die wichtigen Datenpakete zuerst zu verarbeiten und damit die Latenz für Reaktionen zu verkürzen.

Durch die Selektion von zu verifizierenden Datenpaketen nach klaren Regeln kann die Hardwareunterstützung für die die Verifikation und/oder Vorverarbeitung durchführende Recheneinheit weniger aufwendig ausfallen und damit Kosten sparen, da nicht alle Datenpakete geprüft werden müssen bzw. die wichtigsten Datenpakete zuerst geprüft werden.

## Patentansprüche

1. Verfahren zur Verifikation und/oder Vorverarbeitung von Datenpaketen, die in einer drahtlosen Fahrzeug-zu-Umgebung-Kommunikation durch ein Empfangsgerät eines Fahrzeugs empfangen werden, bei dem in dem Empfangsgerät die Relevanz der empfangenen Datenpakete ermittelt wird und die Datenpakete entsprechend ihrer Relevanz für die Verifikation und/oder die Vorverarbeitung priorisiert werden, wobei die Ermittlung der Relevanz von dem Abstand des Sendegeräts zu dem Empfangsgerät abhängt, und bei dem die Überprüfung der Signatur der Sendegeräte der Datenpakete und/oder die Vorverarbeitung der Datenpakte in einer durch die Priorisierung vorgegebenen Reihenfolge durchgeführt wird, die Ermittlung der Relevanz auch von der Art des Datenpakets und/oder von der Art oder Lage des Sendegeräts abhängt, wobei die Lage des Sendegeräts bezogen auf ein anderes sicherheitsrelevantes Objekt berücksichtigt wird, wobei für die Ermittlung der von dem Abstand des Sendegeräts zum Empfangsgerät abhängigen Relevanz und/oder für die Ermittlung der sicherheitskritischen Objekte in der Umgebung des Fahrzeugs eine vorgegebene Geometrie um das Fahrzeug erzeugt wird, **dadurch gekennzeichnet, dass** die vorgegebene Geometrie analog zu der Form der Lichtverteilung eines Scheinwerfers in Abhängigkeit von der Fahrsituation in ihrer Ausdehnung, Ausrichtung und Form angepasst wird.

2. Verfahren nach Anspruch 1, **dadurch gekennzeichnet, dass** bei der Ermittlung der Relevanz die Lage des Sendegeräts bezogen auf ein dynamisches Objekt berücksichtigt wird.

3. Verfahren nach Anspruch 1 oder 2, **dadurch gekennzeichnet, dass** bei der Berücksichtigung der Lage des Sendegeräts zunächst sicherheitskritische Objekte in der Umgebung des Fahrzeugs ermittelt werden und ein Abstandsbereich zu jedem sicherheitskritischen Objekt ermittelt wird und dass dann die sicherheitskritischen Objekte in eine Relevanzreihenfolge gebracht werden, wobei anschließend Datenpakte aus dem Abstandsbereich der sicherheitskritischen Objekte in der durch die Relevanzreihenfolge der sicherheitskritischen Objekte vorgegebenen Reihenfolge vorverarbeitet und/oder verifiziert werden.

4. Verfahren nach einem der vorhergehenden Ansprüche, **dadurch gekennzeichnet, dass** für die Abhängigkeit der Relevanz von dem Abstand des Sendegeräts zum dem Empfangsgerät und/oder für die Ermittlung der sicherheitskritischen Objekte in der Umgebung des Fahrzeugs die Fahrsituation des Fahrzeugs berücksichtigt wird.

5. Verfahren nach einem der vorhergehenden Ansprüche, **dadurch gekennzeichnet, dass** für die Abhängigkeit der Relevanz von dem Abstand des Sendegeräts zum dem Empfangsgerät und/oder für die Ermittlung der sicherheitskritischen Objekte in der Umgebung des Fahrzeugs eine Geschwindigkeit des Sendegeräts berücksichtigt wird.

6. Verfahren nach einem der vorhergehenden Ansprüche, **dadurch gekennzeichnet, dass** für die Ermittlung der sicherheitskritischen Objekte in der Umgebung des Fahrzeugs die Art des sicherheitsrelevanten Objekts, die Anzahl der sicherheitsrelevanten Objekte in der Empfangsumgebung, die Anzahl der aktuell durch das Empfangsgerät pro Zeiteinheit empfangenen Datenpakete und/oder die Rechenleistung berücksichtigt werden

7. Steuergerät eines Kraftfahrzeugs zur Verifikation und/oder Vorverarbeitung von Datenpaketen mit einem Empfangsgerät für eine drahtlose Fahrzeug-zu-Umgebung-Kommunikation und mit einer Recheneinheit, **dadurch gekennzeichnet , dass** die Recheneinheit zur Durchführung des Verfahrens nach einem der Ansprüche 1 bis 6 eingerichtet ist.

## Claims

1. Method for verifying and/or preprocessing data packets which are received by a receiving device in a vehicle during wireless vehicle-to-environment communication, in which the relevance of the received data packets is determined in the receiving device and the data packets are prioritized for verification and/or preprocessing according to their relevance, the determination of the relevance depending on the distance between the transmitting device and the receiving device, and in which the signature of the transmitting devices of the data packets is checked and/or the data packets are preprocessed in an order predefined by the prioritization, the determination of the relevance also depends on the type of data packet and/or the type or position of the transmitting device, the position of the transmitting device based on another safety-relevant object being taken into account, a predefined geometry being produced around the vehicle for determining the relevance depending on the distance between the transmitting device and the receiving device and/or for determining the safety-critical objects in the area surrounding the vehicle, **characterized in that** the predefined geometry, in a similar manner to the form of light distribution of a headlight, is adapted, in terms of its extent, orientation and shape, on the basis of the driving situation.

2. Method according to Claim 1, **characterized in that** the position of the transmitting device based on a dynamic object is taken into account when determining the relevance.

3. Method according to Claim 1 or 2, **characterized in that** safety-critical objects in the area surrounding the vehicle are first of all determined when taking into account the position of the transmitting device and a distance range to each safety-critical object is determined, and **in that** the safety-critical objects are then put into a relevance order, data packets from the distance range of the safety-critical objects then being preprocessed and/or verified in the order predefined by the relevance order of the safety-critical objects.

4. Method according to one of the preceding claims, **characterized in that** the driving situation of the vehicle is taken into account for the dependence of the relevance on the distance between the transmitting device and the receiving device and/or for determining the safety-critical objects in the area surrounding the vehicle.

5. Method according to one of the preceding claims, **characterized in that** a speed of the transmitting device is taken into account for the dependence of the relevance on the distance between the transmitting device and the receiving device and/or for determining the safety-critical objects in the area surrounding the vehicle.

6. Method according to one of the preceding claims, **characterized in that**
the type of safety-relevant object, the number of safety-relevant objects in the reception environment, the number of data packets currently received by the receiving device per unit time and/or the computing power is/are taken into account for determining the safety-critical objects in the area surrounding the vehicle.

7. Control device of a motor vehicle for verifying and/or preprocessing data packets, having a receiving device for wireless vehicle-to-environment communication and having a computing unit, **characterized in that** the computing unit is set up to carry out the method according to one of Claims 1 to 6.

## Revendications

1. Procédé de vérification et/ou de prétraitement de paquets de données qui sont reçus par un récepteur d'un véhicule dans une communication sans fil de véhicule à environnement, procédé selon lequel la pertinence des paquets de données reçus est déterminée dans le récepteur et une priorité est attribuée aux paquets de données en fonction de leur pertinence pour la vérification et/ou le prétraitement, la détermination de la pertinence étant dépendante de la distance entre l'émetteur et le récepteur, et procédé selon lequel la vérification de la signature des émetteurs des paquets de données et/ou le prétraitement des paquets de données sont effectués dans un ordre prédéfini par les priorités, la détermination de la pertinence dépendant également de la nature du paquet de données et/ou de la nature ou de la position de l'émetteur,
la position de l'émetteur par rapport à un autre objet concernant la sécurité étant prise en compte,
une forme géométrique prédéfinie étant générée autour du véhicule pour la détermination de la pertinence dépendante de la distance entre l'émetteur et le récepteur et/ou pour la détermination des objets critiques pour la sécurité dans l'environnement du véhicule,
**caractérisé en ce que** l'étendue, l'orientation et la forme de la forme géométrique prédéfinie sont adaptées de manière similaire à la forme de la distribution lumineuse d'un feu avant en fonction de la situation de conduite.

2. Procédé selon la revendication 1, **caractérisé en ce que** la position de l'émetteur par rapport à un objet dynamique est prise ne compte lors de la détermination de la pertinence.

3. Procédé selon la revendication 1 ou 2, **caractérisé en ce que** lors de la prise en compte de la position de l'émetteur, les objets critiques pour la sécurité dans l'environnement du véhicule sont tout d'abord déterminés, puis une plage de distances par rapport à chaque objet critique pour la sécurité est déterminée, et **en ce que** les objets critiques pour la sécurité sont ensuite placés dans un ordre de pertinence, les paquets de données issus de la plage de distances d'objets critiques pour la sécurité étant ensuite prétraités et/ou vérifiés dans l'ordre prédéfini par l'ordre de pertinence des objets critiques pour la sécurité.

4. Procédé selon l'une des revendications précédentes, **caractérisé en ce que** la situation de conduite du véhicule est prise en compte pour la dépendance de la pertinence à la distance entre l'émetteur et le récepteur et/ou pour la détermination des objets critiques pour la sécurité dans l'environnement du véhicule.

5. Procédé selon l'une des revendications précédentes, **caractérisé en ce qu'**une vitesse de l'émetteur est prise en compte pour la dépendance de la pertinence à la distance entre l'émetteur et le récepteur et/ou pour la détermination des objets critiques pour la sécurité dans l'environnement du véhicule.

6. Procédé selon l'une des revendications précédentes, **caractérisé en ce que** la nature de l'objet critique pour la sécurité, le nombre d'objets critiques pour la sécurité dans l'environnement de réception, le nombre de paquets de données actuellement reçus par le récepteur par unité de temps et/ou la puissance de calcul sont pris en compte pour la détermination des objets critiques pour la sécurité dans l'environnement du véhicule.

7. Contrôleur d'un véhicule automobile pour la vérification et/ou le prétraitement de paquets de données, comprenant un récepteur pour une communication sans fil de véhicule à environnement et comprenant une unité de calcul, **caractérisé en ce que** l'unité de calcul est conçue pour mettre en oeuvre le procédé selon l'une des revendications 1 à 6.
